# EUROPÄISCHE PATENTSCHRIFT

(11) **EP 3 632 640 B1**
(45) Veröffentlichungstag und Bekanntmachung des Hinweises auf die Patenterteilung: **12.05.2021**
(21) Anmeldenummer: 19199676.8
(22) Anmeldetag: 25.09.2019
(51) Int. Cl.: B29C 35/02, B29C 55/12

(54) **BEHANDLUNGSANLAGE FÜR EINE DURCH EINEN BEHANDLUNGSOFEN HINDURCHFÜHRBARE FLEXIBLE MATERIALBAHN, INSBESONDERE KUNSTSTOFFFOLIE**
TREATMENT PLANT FOR A FLEXIBLE MATERIAL SHEET WHICH CAN BE PASSED THROUGH A TREATMENT FURNACE, ESPECIALLY A PLASTIC FILM
INSTALLATION DE TRAITEMENT POUR UNE BANDE DE MATIÈRE FLEXIBLE POUVANT ÊTRE GUIDÉE VERS UN FOUR DE TRAITEMENT, EN PARTICULIER FEUILLE EN MATIÈRE PLASTIQUE

(30) Priorität: 04.10.2018 DE 102018124521
(43) Veröffentlichungstag der Anmeldung: 08.04.2020
(73) Patentinhaber: Brückner Maschinenbau GmbH & Co. KG, 83313 Siegsdorf (DE)
(72) Erfinder: Höglauer, Christoph, 83329 Waging am See (DE); Unterreiner, Markus, 83250 Marquartstein (DE); Wettemann, Anton, 83377 Vachendorf (DE)
(74) Vertreter: Flach Bauer Stahl Patentanwälte Partnerschaft mbB

(56) Entgegenhaltungen:
- EP-A1- 1 616 690
- EP-A2- 1 441 192
- US-A- 3 909 953
- US-A- 4 150 494

## Beschreibung

Die Erfindung betrifft eine Behandlungsanlage für eine durch einen Behandlungsofen hindurchführbare flexible Materialbahn, insbesondere in Form eines Kunststofffolienfilms, nach dem Oberbegriff des Patentanspruchs 1.

Bei derartigen Behandlungsanlagen handelt es sich häufig um Folienreckanlagen, die insbesondere in der Kunststofffolienherstellung Anwendung finden. Bekannt sind so genannte Simultan-Reckanlagen, in welchen ein Kunststofffilm gleichzeitig in Längs- und Querrichtung gereckt werden kann. Ebenso bekannt sind so genannte sequenzielle Reckanlagen, bei denen der Kunststofffilm in zwei aufeinanderfolgenden Stufen gereckt wird, beispielsweise zunächst in Längsrichtung und dann in Querrichtung (oder umgekehrt). Schließlich sind auch reine Längsreck- sowie reine Querreckanlagen bekannt.

Bekanntermaßen wird bei der Herstellung eines Kunststofffilms die zu reckende Materialbahn an den beiden gegenüberliegenden Filmrändern mittels Kluppen erfasst, die auf beiden Seiten der zu reckenden Materialbahn auf umlaufenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegende Kluppen auf den Führungsschienenabschnitten mit einer Querkomponente divergierend zur Transportrichtung voneinander weg bewegt werden) zu einer Auslaufzone und dann auf einem Rückweg wieder zur Einlaufzone verfahren, wobei die Folie der Reckzone nachgelagert in ein- oder mehreren Behandlungszonen (Annealingzone, Kühlzone) beispielsweise noch einer gewissen Relaxation und/oder Wärmenachbehandlung üblicherweise unterzogen wird.

Der Kunststofffilm muss vor, während und nach dem eigentlichen Reckvorgang einer in den einzelnen Abschnitten unterschiedlichen Aufheiz- und bzw. Kühlphasen unterzogen werden. Von daher durchläuft die zu reckende Kunststofffolienbahn einen Ofen, der aufeinanderfolgend unterschiedliche Behandlungszonen (dazwischenliegend auch ggf. neutrale Zonen) aufweist. In diesen Behandlungszonen wird der herzustellende Kunststofffolienfilm nicht nur einer unterschiedlichen Wärmebehandlung unterzogen, sondern es muss vor allem auch eine Ofenluftversorgung vorgesehen sein, um den Ofeninnenraum der Reckanlage stets mit frischer Luft zu versorgen und die belastete Luft abzusaugen.

Da sich ein derartiger Behandlungsofen in der Regel in mehrere Behandlungsabschnitte in Form von Behandlungszonen gliedert, tritt der Kunststofffolienfilm, also allgemein die flexible Materialbahn, aus der einen Zone aus und tritt in eine nächste Zone ein, in der unter Umständen eine Behandlung der Materialbahn bei anderen Temperaturen stattfindet.

Grundsätzlich gliedert sich eine Reckanlage in mehrere Zonen. So können beispielsweise eine Vorheizzone, eine Reckzone, eine Annealingzone und eine Kühlzone vorgesehen sein. Die Vorheiz- und Reckzone können auch als gemeinschaftliche Zone ausgebildet sein. Die Kühlzonen (aber auch grundsätzlich andere Zonen), können in mehrere getrennte Zonen aufgegliedert sein, beispielsweise in eine erste und zweite Kühlzone, die aufeinanderfolgend vorgesehen sind, und eine dritte Kühlzone am Abschluss der Reckanlage, die z. B. durch eine zwischen der zweiten und der dritten Kühlzone vorgesehenen Neutralzone getrennt ist. Eine derartige Neutralzone kann beispielsweise auch zwischen der Reckzone und der Annealingzone vorgesehen sein (und dann noch an anderen Stellen). In der Regel dort, wo eine Zone in eine Neutralzone und die Neutralzone dann wieder in eine nachfolgende Zone übergeht, ist für den Reckofen durch bewegten Kunststofffolienfilm ein Eintritts- und ein Austrittsspalt (teilweise auch ein Eintritts- und ein Austrittsschlitz genannt) vorgesehen. Ansonsten können die einzelnen Zonen auch mehrere Kammern umfassen wie beispielsweise die Annealingzone, die eine Vielzahl von Kammern aufweisen kann. Zwischen den einzelnen Kammern einer Zone sind in der Regel keine Ein- und Austrittsspalte für den Kunststofffolienfilm vorgesehen.

Vor diesem Hintergrund stellt sich stets das Problem, dass beispielsweise im Bereich eines Auslasses von einer Behandlungszone in eine Neutralzone Fluid mit dem fortbewegten Film quasi mitgenommen, also "mitgerissen" wird. Ebenso kann beim Eintritt des Kunststofffolienfilms aus einer Neutralzone in eine nachfolgende Behandlungszone (Umgebungs-)Luft in den Behandlungsraum der nachfolgenden Behandlungszone miteingetragen wird. Dieser Austritt vom Fluid aus einer Behandlungszone in eine Neutralzone sowie der Eintrag von Umgebungsluft (die in einer Neutralzone vorhanden ist) in eine nachfolgende Behandlungszone wird letztlich durch den durch den Reckofen hindurch bewegten Kunststofffolienfilm verursacht, der physikalisch bedingt angrenzendes Fluid oder angrenzende Luftschichten mitnimmt.

Tritt also beispielsweise der Kunststofffolienfilm aus einer schlitzförmigen Öffnung einer Behandlungszone aus, nimmt er durch diesen Schlitz hindurch entsprechendes Fluid aus der Behandlungszone mit, wobei das Fluid eine entsprechende Zonentemperatur aufweist.

Ein ähnliches Problem tritt auf, wenn aus der Neutralzone Fluid (also in der Regel Umgebungsluft) von der Kunststofffolie mitgenommen und in die nachfolgende Behandlungszone eingeführt wird.

In der Regel befinden sich nämlich das mitgenommene Fluid auf einer für diese nachfolgende Behandlungskammer nicht optimalen Behandlungstemperatur, weil das entsprechend miteingeführte Fluid entweder zu heiß oder zu kühl ist und die eingestellte Behandlungskammertemperatur verändert.

Neben dem durch die Folienbewegung mitgeführtem Fluid entsteht durch die unterschiedlichen Druckniveaus im Gesamtofen eine zusätzliche sich überlagernde Grundströmung, welche ebenfalls den Fluidaustausch zwischen den Behandlungskammern und/oder zwischen den Behandlungskammern einer nachfolgenden Neutralzone oder einer Neutralzone und einer nachfolgenden Behandlungskammer verstärkt.

Eine unzureichende Abschottung zwei verschiedener Zonen kann aber nicht nur einen relativ unkontrolliert austretenden Luftstrom über die gesamte Folienbahn bewirken, sondern kann darüber hinaus auch zu relativ unkontrollierbaren Druckverhältnissen führen. Bei sehr breiten Kunststofffolienbahnen und entsprechend unsteten Luftdruckverhältnissen können bei den vorgesehenen Austrittsspalten gleichzeitig ein Lufteinzug und ein Luftauszug über die gesamte Breite der Kunststofffolienbahn erfolgen, wobei die Kunststofffolienbahn dadurch über ihre Breite hinweg unterschiedlich temperiert werden könnte, was bei Kunststofffolien beispielsweise zu Planlagenproblemen führen kann.

In Kombination stellt sich also eine Grundströmung aufgrund der Schleppwirkung der Folie und/oder der bestehenden Druckdifferenzen im Ofen ein, die zu Zonen mit einer "falschen Temperatur" führen kann. So kann beispielsweise heiße Luft in eine kalte Ofenzone oder umgekehrt kalte Luft in eine heiße Ofenzone strömen.

Dies kann grundsätzlich zu einer schlechteren Folienqualität führen, d.h. schlechtere mechanische Eigenschaften der Folie aufgrund falscher Aufheizung bzw. falscher Abkühlung, zumindest also aufgrund keiner optimalen Aufwärmung oder Abkühlung. Diese Verschlechterungen treten vor allem beim Verstrecken der Folie auf.

Von daher ist bereits vorgeschlagen worden, eine thermische Trennung zwischen zwei aufeinanderfolgenden Behandlungskammern oder Behandlungszonen einzurichten, und zwar in Form sogenannter Neutralzonen. Derartige Neutralzonen können überall zwischen zwei Behandlungszonen vorgesehen sein, beispielsweise zwischen der Streck-und der Annealingzone oder beispielsweise zwischen der Annealing- und der Kühlzone sowie teilweise auch vor der letzten Kühlzone.

Gleichwohl hat sich allerdings herausgestellt, dass selbst die Realisierung von sogenannten Neutralzonen nicht ausreichend ist, da immer noch in unerwünscht hohem Maße beim Austritt der Materialbahn aus einer vorausgegangenen Behandlungszone dort befindliches Fluid aufgrund der Schleppwirkung in die Neutralzone eingeführt wird bzw. Fluid aus der Neutralzone in unerwünschter Menge über den Einführschlitz in die nachfolgende Behandlungszone mitgenommen wird.

Von daher ist bereits versucht worden, Abschottungseinrichtungen zu realisieren, um die Menge des mitgeschleppten gasförmigen Mediums beim Eintritt und/oder beim Austritt aus einer Behandlungskammer, in der Regel einem Ofen, weiter zu beschränken bzw. zu minimieren.

Gemäß der DE 92 13 802 U1 ist eine Abschottungseinrichtung für eine Reckanlage, insbesondere eine Breitreckanlage für Kunststofffolienbahnen vorgeschlagen worden, bei der in Abzugsrichtung der Folienbahn versetzt zueinander liegende Behandlungszonen ausgebildet sind. Diese weisen jeweils einen Eintritt- bzw. Austrittsspalt auf, durch die die abzuziehende Folienbahn eintritt bzw. austritt. Dazu wird eine Schwebedüse beschrieben, wodurch eine für den Filmeintritt bzw. Filmaustritt vorgegebene Spaltbegrenzung in ihrer Wirkung begrenzt werden soll. Diese Düsenauslassöffnung ist dazu im Wesentlichen tangential zur Folienbahn gerichtet und/oder erlaubt eine im Wesentlichen tangential zur Ebene der Folienbahn gerichtete Strömung des durch die Düsenauslassöffnung ausströmenden gasförmigen Mediums, wobei die auf der zur Schwebedüse gegenüberliegenden Seite der Folienbahn gebildete Spaltbegrenzung in ihrem Absatz zur Folienbahn einstellbar sein soll.

So wird in der vorstehend genannten DE 92 13 802 U1 auch abgehandelt, dass grundsätzlich denkbar wäre, auf beiden Seiten einer Folienbahn jeweils eine obere und eine untere Düse anzuordnen, worüber beispielsweise Luft quer zur Ebene der Folienbahn unter Erzeugung eines beidseitig angeordneten Luftkissens geblasen werden könnte. Derartige Air-Locks, mittels derer eine Abschottung zwischen den Zonen ermöglicht werden soll, können dann gemäß der DE 92 13 802 U1 allerdings nicht über eine größere Folienbreite hinweg so eingestellt werden, dass stets eine gleichmäßige und ruhige Abzugsbewegung der Folienbahn gewährleistet wäre.

Aus der EP 1616690 A1 ist eine Reckanlage als bekannt zu entnehmen.

In dieser Vorveröffentlichung wird eine Reckvorrichtung gezeigt und erläutert, die zwei in Abzugsrichtung der

Materialbahn versetzt zueinander liegende Behandlungskammern aufweist. Zwischen beiden Kammern ist eine Zwischenzone vorgesehen.

In jeder der beiden Behandlungskammern wird Luft umgewälzt, wobei mit der Materialbahn eine benachbarte Luftschicht durch die Behandlungskammern hindurch mitbewegt und dadurch aus der ersten Kammer herausbewegt wird.

Um diese zur Materialbahn benachbarte mitbewegte Luftschicht zu blockieren, ist in der Zwischenzone eine spezifische Einrichtung vorgesehen, in der eine schräg auf die bewegte Materialbahn zu verlaufende Luftschicht erzeugt wird, und zwar entgegengesetzt zur Abzugsrichtung der Materialbahn.

Abschließend soll wird noch auf die Vorveröffentlichung EP 1 441 192 A2 verwiesen. Sie beschreibt eine Vorrichtung zum ersetzen des Luftsauerstoffs durch ein Inertgas aus einer laminaren Luftgrenzschicht. Gezeigt ist, dass hierfür ein separater Inertgasverteiler vorgesehen ist, der einer Behandlungszone nachgeordnet ist, und der mit einer auf die Materialbahn weisenden, im geringen Abstand dazu endenden Düsenaustrittsöffnung versehen ist. Diese Düsenaustrittsöffnung liegt dabei der Materialbahn näher als das untere Ende der eigentlichen Wand der vorgelagerten Behandlungskammer.

Vor diesem Hintergrund ist es Aufgabe der vorliegenden Erfindung, eine nochmals verbesserte Lösung für eine Abschottungsvorrichtung für eine Behandlungszone, insbesondere in Form eines Behandlungs- oder Reckofens für bewegte Materialbahnen, insbesondere in Form einer zu reckenden Kunststofffolienbahn zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Es muss als durchaus überraschend angesehen werden, dass im Rahmen der Erfindung eine deutliche Verbesserung einer Abschottungswirkung hinsichtlich der einzelnen Öfen und damit der einzelnen Behandlungszonen oder Behandlungskammern erzielt werden kann.

Dabei werden im Rahmen der Erfindung zumindest am Übergang von einer Behandlungszone zu einer Neutralzone und/oder am Übergang von einer Neutralzone zu einer Behandlungszone entsprechend einstellbare Abschottungswände verwendet, beispielsweise in Form von einstellbaren oder klappbaren Blechen (die nachfolgend teilweise auch als "Shutter" oder auch als "Luft-Shutter" bezeichnet werden). Diese können so auf die bewegte Materialbahn zu verstellt werden, damit der Abstand zwischen der zur bewegten Materialbahn weisenden Abschluss- oder Begrenzungskante und der Ebene der Materialbahn selbst möglichst gering ist. Dadurch kann also der vorhandene Eintritt- oder Austrittsspalt für die bewegte flächige Materialbahn schon weitgehend minimiert werden, um den Eintritt oder den Austritt eines gasförmigen Mediums in den Behandlungs- oder Reckofen hinein bzw. aus diesem heraus zu minimieren. Bei einem Shutter handelt es sich also um eine die Spalthöhe für den durchzulassenden Film begrenzenden Einstelleinrichtung, die als eine Art einstellbare Jalousie, Einstell- und/oder Verschlussklappe oder Blende bezeichnet werden kann.

Am Ofeneinlass und Ofenauslass werden üblicherweise andere Shutter-Lösungen gewählt.

Die erfindungsgemäßen Vorteile lassen sich noch umfassender und mit noch besserem Effekt dann realisieren, wenn neben diesen teilweise auch als Air-Shutter bezeichneten einstellbaren Abschottungswänden ein Luftschleier oder Luftvorhang aufgeprägt wird, der in Abzugsrichtung der bewegten Materialbahn bevorzugt nach einem Auslassspalt von einer Behandlungszone in eine Neutralzone und/oder bevorzugt vor einem Einlassspalt am Übergang von einer Neutralzone zu einer Behandlungszone vorgesehen bzw. positioniert ist.

Dabei wird ein flächiger Luftstrahl erzeugt, der auf die Abschottungswand (Shutter-Blech) gelegt wird, so dass der Verlauf der Abschottungswände dann als weiteres Leit- oder Führungsblech dient, um den hierauf gerichteten gasförmigen Medienstrahl in Richtung der bewegten Materialbahn weiter zu führen und zu stabilisieren. Dabei verläuft der Luftstrahl mehr oder weniger in dem Bereich benachbart zur Materialbahn parallel zur Abschottungswand (Shutter-Blech), und zwar mehr oder weniger senkrecht bis auf die Ebene der bewegten Materialbahn zu, um so quasi den Eintritts- und/oder Austrittsspalt zu "sperren".

Es wird insoweit grundsätzlich das physikalische Prinzip des sogenannten Coanda-Effekts ausgenützt, der beschreibt, wie bewegte Fluidströme, beispielsweise auch

Gasströme, der Oberseite einer Begrenzungswand folgen, hiervon sich quasi "nicht ablösen", mit der Folge, dass aufgrund des Coanda-Effekts beispielsweise ein Gas- oder Luftstrom sogar einer konvexen Krümmung einer benachbarten Wand folgen würde.

Durch die geschilderten Maßnahmen kann kein gasförmiges Medium mehr (zumindest in relevanter Menge) im Bereich des Einlassspaltes in eine Behandlungszone eintreten oder im Bereich eines Austrittsspaltes aus einer Behandlungszone austreten Dabei ist in der realen Anwendung einer derartige Abschottungseinrichtung sowohl auf der Ober- als auch auf der Unterseite der bewegten Materialbahn vorgesehen, also an beiden sich gegenüberliegenden Seiten der bewegten Materialbahn, wobei die eingangs- bzw. ausgangsseitig vorgesehenen Abschottungswände bevorzugt als durchgängige Wände gestaltet sind, deren Eintritts- bzw. Austrittsspalt zumindest geringfügig breiter ist als die Breite der hindurchbewegten Materialbahn.

Mit anderen Worten wirkt also der gasförmige Medienstrahl, der nachfolgend teilweise als Fluidstahl bezeichnet wird, wie eine Sperrströmung gegenüber der Ofengrundströmung und verhindert somit das Einströmen von Luft aus einer Neutralzone oder das Ausströmen in eine Neutralzone. Dadurch wird vor allem auch verhindert, dass ein gasförmiges Medium aus einer Behandlungszone austritt, beispielsweise eine nachfolgende Neutralzone durchströmt und über den Einlassspalt einer darauffolgenden weiteren Behandlungszone eingeführt wird.

Die Wirkung und die Effekte können alternativ oder auch kumulativ gelöst in Ergänzung zur vorstehend genannten Lösung dadurch weiter verbessert werden, dass der gasförmige Fluidstrahlbereich mit einer Temperatur auf die bewegte Materialbahn zu geblasen wird, die mehr oder weniger identisch zu der Temperatur der angrenzenden vorausgehenden und/oder nachfolgenden Zone ist. Die Strömungsgeschwindigkeit des Strahlers kann dabei je nach Anwendung variiert werden. Geschwindigkeiten im Bereich von 5 - 25 m/s haben sich dabei als besonders günstig erwiesen.

Die Vorteile der Erfindung liegen unter anderem zum einen in der erwähnten Reduzierung oder Unterbindung der Ofengrundströmung (über die Eintritts- oder Austrittsspalten der entsprechenden Zonen hinweg), also auch in einer Stabilisierung der bewegten Materialbahn, insbesondere im Fall einer Kunststofffolie. Dies gilt vor allem auch beim Durchgang beispielsweise einer Kunststofffolie durch einen entsprechenden Shutter-Spalt (Einlass-oder Auslassspalt).

Dabei werden die erfindungsgemäßen Vorteile umso besser realisiert, je näher entsprechende Abgrenz- oder Trennwände, also insbesondere die sogenannten Shutter-Bleche an die bewegte Materialbahn beispielsweise in Form einer Kunststofffolienbahn herangeführt ist.

Sollte beispielsweise eine Kunststofffolienbahn einen größeren Durchhang aufweisen oder eine größere Auslenkung in Vertikalrichtung durchlaufen, würde der erfindungsgemäß vorgesehene Air-Shutter nach Art eines sogenannten Fluidfreistrahlers in sicherem Abstand zwischen der bewegten Materialbahn zum einen und der benachbart dazu verlaufenden Begrenzungskante (wodurch ein Eintritt- oder Austrittspalt begrenzt ist) gewährleisten. Dadurch kann eine Beschädigung der bewegten Materialbahn insbesondere im Fall einer Kunststofffolienbahn oder ein Folienriss verhindert werden.

Ein weiterer Vorteil der erfindungsgemäßen Lösung liegt darin, dass durch den definierten und über die Arbeitsbreite stabilen Air-Shutter-Strahl, der als fächerförmiger oder eher flächiger gasförmiger Strahl bezeichnet werden kann, ein definierter Wärmeübergang möglich ist. Dieser kann dazu genutzt werden, beispielsweise die bewegte Materialbahn insbesondere im Fall einer Kunststofffolienbahn auf ein vorbestimmtes Temperaturniveau zu erwärmen oder abzukühlen.

Die Erfindung lässt sich in unterschiedlichsten Anlagen einsetzen. Das erfindungsgemäße Air-Shutter-Prinzip lässt sich in allen Folienreckanlagen mit einer Folienheizung durch Heißluft einsetzen. Es hat sich ferner gezeigt, dass die erfindungsgemäße Lösung sowohl bei Simultan- als auch bei sequentiellen Folienreckanlagen oder bei reinen Längs- oder Querreckanlagen realisierbar ist und zu den gewünschten Vorteilen führt. Versuche haben auch gezeigt, dass die erfindungsgemäßen Vorteile erreichbar sind, auch wenn die bewegte Materialbahn in unterschiedlichen Geschwindigkeiten durch die einzelnen Zonen hindurchbewegt werden, also beispielsweise mit mehr als 50 m/min, wobei die Vorteile auch dann noch realisierbar waren, wenn die Geschwindigkeiten über die vorstehend genannten Werte hinaus gesteigert wurden, und zwar beispielsweise bis zu 700 m/min.

Die leicht schräge Anblasung der Shutter-Trennwände (also der sogenannten Shutter-Bleche) in der Regel in einem Winkel von weniger als 45°, vorzugsweise kleiner als 40°, 35°, 30°, 25°, 20°, 15° oder auch weniger als 10° kann ähnlich wie bei den in den einzelnen Zonen (oder Öfen) eingesetzten Heiz- oder Kühleinrichtungen mittels Luftdüsenkästen erfolgen, welche über Ventilatoren und Wärmetauscher betrieben bzw. beheizt werden. Die Absaugung des gasförmigen Fluidstrahls kann beispielsweise zentral über einen zur Kunststofffolienbahn entfernt liegenden in einer Deckenkonstruktion der Anlage vorgesehenen Austrittsbereich realisiert sein oder auch beispielsweise über separate Absaugkästen. Ergänzend und alternativ ist es auch möglich die Absaugung für den Gasförmigen Fluidstrahls zentral unterhalb der Kunststofffolienbahn vorzusehen, beispielsweise über eine Kunststofffolienbahn entfernt liegende Bodenkonstruktion.

Hinsichtlich des verwendeten gasförmigen Fluidstroms in der Regel in Form von Luft erfordert keine Einhaltung bestimmter Grenzwerte oder Parameter. Kritisch ist allenfalls die Temperatur des gasförmigen Fluidstroms / der Luft, da in Abhängigkeit der Temperaturen die Effekte noch weiter verbessert werden können. Dabei ist es durchaus möglich, dass beispielsweise Luft aus einer jeweils angrenzenden Zone mitverwendet wird, oder dass beispielsweise erwärmte Frischluft herangezogen wird, um mittels der Air-Shutter-Einrichtung in Richtung Kunststofffolienbahn geblasen zu werden.

Die Einrichtung zur Erzeugung eines Air-Shutter-Luft-oder allgemein gasförmigen Fluidstroms kann beispielsweise über Schlitzdüsen, ebenso aber auch über Lochdüsen erfolgen, wodurch die Herstellung des Düsenkastens für eine derartige Shutter-Anblasung nochmals vereinfacht wird. Ebenso sind auch Kombinationen beispielsweise von Loch- und Schlitzdrüsen möglich.

Die Absaugung des eingebrachten gasförmigen Mediums erfolgt dabei entweder in direkter Nähe zum Fluidfilms oder in einiger Entfernung dazu. In der beispielhaften Anwendung des Air-Shutters am Ein- und Auslass einer Neutralzone, soll die Absaugung innerhalb dieser erfolgen. Dadurch ergeben sich die charakteristischen Fluidströmungswalzen, welche den Sperrströmungsstrahl zusätzlich stabilisieren.

Die Erfindung wird nachfolgend anhand von Zeichnungen näher erläutert. Dabei zeigen im Einzelnen:
- Figur 1:: eine schematische Seitenansicht einer Ofenanordnung für eine Kunststofffolienreckanlage;
- Figur 2:: eine schematische vereinfachte Querschnittsdarstellung senkrecht zur bewegten Materialbahn zur Verdeutlichung des Air-Shutter-Prinzips;
- Figur 3:: eine vergrößerte Detaildarstellung eines ersten Ausführungsbeispiels der Erfindung;
- Figur 4:: eine weitere Darstellung eines erfindungsgemäßen Lösungsprinzips für ein abgewandeltes Ausführungsbeispiel;
- Figur 5:: eine scheibenförmige Schnittdarstellung zur Verdeutlichung der Verwendung von Schlitzdüsen;
- Figur 6:: eine zu Figur 5 entsprechende Darstellung unter Verwendung von Lochdüsen; und
- Figur 7:: ein abweichendes Ausführungsbeispiel einer Düsenanordnung unter Verwendung einer Schlitzdüse und einer Lochdüse.

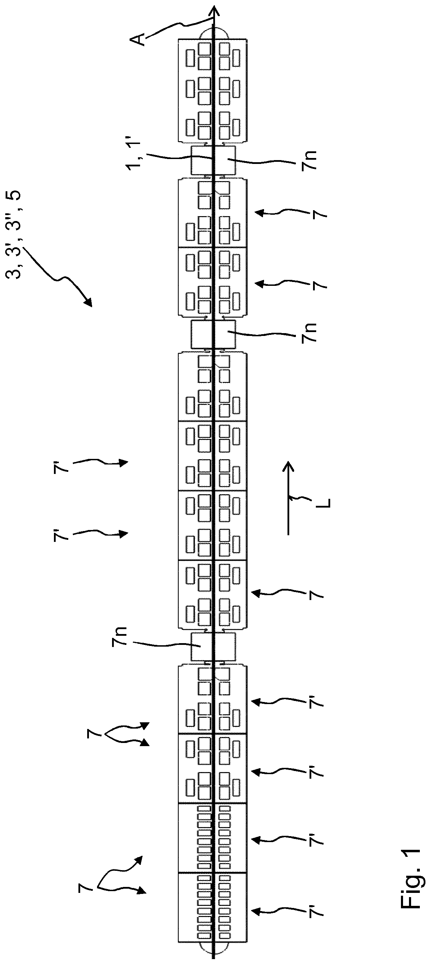

In Figur 1 ist in schematischer Längsschnittdarstellung eine Anlage 3 gezeigt, insbesondere eine Folienreckanlage 3', mit einem Reckofen 3", wobei durch die Folienreckanlage 3' und damit durch den Reckofen 3" eine Materialbahn 1 in Abzugsrichtung A hindurchbewegt wird, d.h. beispielsweise ein Kunststofffolienfilm 1'. Bei der Anlage 3 insbesondere in Form einer Folienreckanlage 3' kann es sich um eine Simultan-Reckanlage oder auch um eine sequentielle Reckanlage handeln, bei der eine Längs- und Querreckung nicht gleichzeitig (wie bei der Simulanreckanlage), sondern erst in Längs- und dann in Querrichtung oder umgekehrt durchgeführt wird. Grundsätzlich kann es sich auch um eine Querreckanlage handeln.

Eine entsprechende Anlage umfasst beispielsweise einen entsprechenden Gehäuseaufbau 5 mit einer Vielzahl von aufeinander folgenden Zonen 7. Im Fall einer Kunststofffolienreckanlage handelt es sich bei den Zonen 7 üblicherweise um Behandlungszonen 7, die über eine Neutralzone 7n voneinander getrennt sind. Die einzelnen Behandlungszonen können dabei nicht nur eine, sondern beispielsweise zwei oder allgemein mehrere Behandlungskammern 7' umfassen. Alle Behandlungszonen 7 bilden dabei den Reckofen 3", der von der bewegten Materialbahn 1 insbesondere in Form des Kunststofffolienfilms 1' durchlaufen wird.

Der Aufbau ist üblicherweise symmetrisch zur Eben E, auf der die bewegte Materialbahn 1 hinwegbewegt wird. Es sind aber auch unsymmetrische Aufbauten möglich.

Die einzelnen Behandlungszonen 7, weisen dabei jeweils zoneneingangsseitig einen Eingangspalt 9a und austrittsseitig einen Austrittsspalt 9b auf, die so hoch und so breit bemessen sind, dass die Materialbahn 1 durch diese Schlitzanordnung hindurch ohne Berührung der Begrenzungskanten des Eingangs- und/oder Austrittsspaltes oder -schlitzes 9a, 9b hindurchbewegt werden kann, um Beschädigungen der Materialbahn, insbesondere in Form des Kunststofffolienfilms zu vermeiden.

Wie schematisch anhand von Figur 1 dargestellt ist kann in den einzelnen Zonen der insbesondere hindurchbewegte Kunststofffolienfilm auf unterschiedliche Temperaturen aufgeheizt werden. Zwischen den einzelnen Zonen können auch sogenannte Neutralzonen 7n vorgesehen sein, um zwei aufeinander folgende Zonen stärker voneinander zu trennen, damit kein gasförmiges Behandlungsfluid leicht aus einer Zone 7 in eine nachfolgende nächste Zone 7 gelangen kann. Um mögliche Schleppwirkungen der Mitnahme von gasförmigem Behandlungsfluid aus einer Zone in eine nachfolgende Zone - verursacht durch die bewegte Materialbahn - zu verhindern, sind erfindungsgemäß verschiedene Maßnahmen vorgesehen.

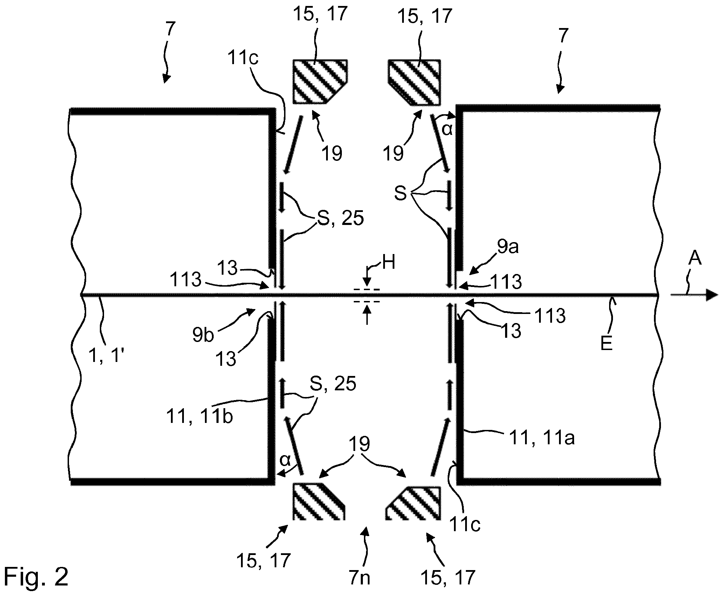

Anhand der schematischen Querschnittsdarstellung gemäß Figur 2 ist ausschnittsweise eine Neutralzone 7n gezeigt, die zwischen in Abzugsrichtung A verlaufenden Zonen 7 angeordnet ist.

Jeweils eingangs- und ausgangsseitig weisen die einzelnen Behandlungszonen 7, Zonenwände 11 auf, d.h. üblicherweise eine Zoneneintrittswand 11a und eine Zonenaustrittswand 11b, die nachfolgend auch als Shutter-Wand, Shutter-Begrenzungswand oder Shutter-Blech benannt werden können.

In diesen Zonenwänden 11 sind die erwähnten Eintritts- bzw. Austrittsspalte 9a, 9b vorgesehen, wobei - bezogen auf die in Figur 2 gezeigte Neutralzone 7n - der in Folienlaufrichtung A vorlaufende Schlitz oder Spalt als Austrittsspalt 9b und der in Abzugsrichtung nach der Neutralzone 7n vorgesehene Spalt in der nachfolgenden Eintrittszonenwand 11a als Eintrittspalt 9a bezeichnet wird.

Die Spalten weisen jeweils im Wesentlichen parallel zur Ebene E der bewegten Materialbahn 1 verlaufende Begrenzungskanten auf, nämlich in der Regel parallel zur Ebene E verlaufende Begrenzungskanten 13. Diese Begrenzungskanten sollen soweit als möglich auf die Filmebene E zulaufen, um die Höhe H der Schlitzanordnung möglichst gering zu halten. Je geringer die Schlitzhöhe H ausfällt, umso weniger gasförmiges Fluid kann aus einer Behandlungszone aus oder in eine nächste Behandlungszone eintreten. Bevorzugt sind von daher die entsprechenden Zonenwände 11 oder sogenannte Shutter oder Shutter-Bleche 113 gegebenenfalls unterschiedlich einstellbar, derart, dass deren Begrenzungskanten 113' in einen optimalen Abstand gegenüber der Ebene E der bewegten Materialbahn eingestellt werden können. Dabei muss berücksichtigt werden, dass unter keinen Betriebsbedingungen die Materialbahn 1 beispielsweise die Begrenzungskanten 13 der Zonenwände 11 oder die üblicherweise über die Begrenzungskanten 13 in Richtung Materialbahn 1 überstehenden Begrenzungskanten 113' des eigentlichen einstellbaren Shutters oder Shutter-Bleches berühren, wodurch ein betreffender Schlitz oder ein Spalt gebildet ist durch den die Materialbahn 1 hindurchbewegt wird. Und es muss vermieden werden, dass es dadurch zu einer Berührung kommt, was zu Filmbeschädigungen oder Filmrissen führen kann.

Im gezeigten Ausführungsbeispiel sind die Zonenwände 11 in Form der Shutter-Begrenzungswände oder Shutter-Bleche senkrecht oder im Wesentlichen senkrecht zur Ebene E der bewegten Materialbahn ausgerichtet und verlaufen dabei senkrecht zur Materialbahn 1, also senkrecht zu der Ebene E des Kunststofffilms 1' und damit auch senkrecht zur Bezugsrichtung A der Materialbahn 1.

Im gezeigten Ausführungsbeispiel ist jeweils eine Düsenanordnung 15 benachbart zu einem Shutter-Blech 11 angeordnet, und zwar außerhalb der eigentlichen Behandlungszonen 7. Im Fall der Neutralzone 7n sind also die beiden Düsenanordnungen 15 in der Neutralzone 7n vorgesehen.

Die Düsenanordnungen 15 weisen eine Düseneinrichtung 17 mit einer Düsenaustrittsöffnung 19 auf, wodurch ein gasförmiger Fluidstrahl S erzeugt wird, der in einem Anblaswinkel α auf die angrenzende Zonenwand 11, d.h. auf die angrenzende Shutter-Begrenzungswand oder das Shutter-Blech zu ausgerichtet ist.

Dadurch wird ein gasförmiger Fluidstrom S erzeugt, wie er durch die Pfeile 25 in Figur 2 dargestellt ist.

Der Anblaswinkel α soll vergleichsweise gering sein, in der Regel unter 45° eingestellt sein. Bevorzugte Werte liegen unter 40°, 35°, 30°, 25°, 20° und insbesondere unter 15° oder sogar unter 12,5°, 10°, 8°, 7°, 6°, 5°, 4°, 3°, 2°, oder unter 1°, wobei der Winkel üblicherweise größer oder gleich 0° ist.

Aufgrund der des Coanda-Effekts hat dies zur Folge, dass der gasförmige Fluidstrom S nach dem Auftreffen auf die Oberfläche 11c einer Shutter-Begrenzungswand dann längs dieser Shutter-Begrenzungswand in Richtung Materialbahn 1 weiterströmt und durch den auftretenden Coanda-Effekt von dieser Oberfläche quasi nicht löst.

Ist dabei die Oberfläche 11c und/oder allgemein die Shutter-Begrenzungswand 11 senkrecht zur Filmebene E ausgerichtet, trifft auch der Fluidstrom S mehr oder weniger senkrecht auf die Materialbahn 1 auf, wie dies in Figur 2 schematisch dargestellt ist. Entsprechend der Ausrichtung der Oberfläche 11c der Shutter-Wand 11 oder der Shutter-Wand 11 selbst ist also der Auftreffwinkel des Fluidstroms S gegenüber der Ebene E der Materialbahn 1 mehr oder weniger festgelegt.

Der Fluidstrahl S bewegt sich dabei bis zur unteren Begrenzungskante 13 eines Shutter-Bleches 11 und über die untere Begrenzungskante 13 in Richtung Materialbahn 1 hinaus, bis der Fluidstrahl S mehr oder weniger direkt auf die Filmebene E stößt.

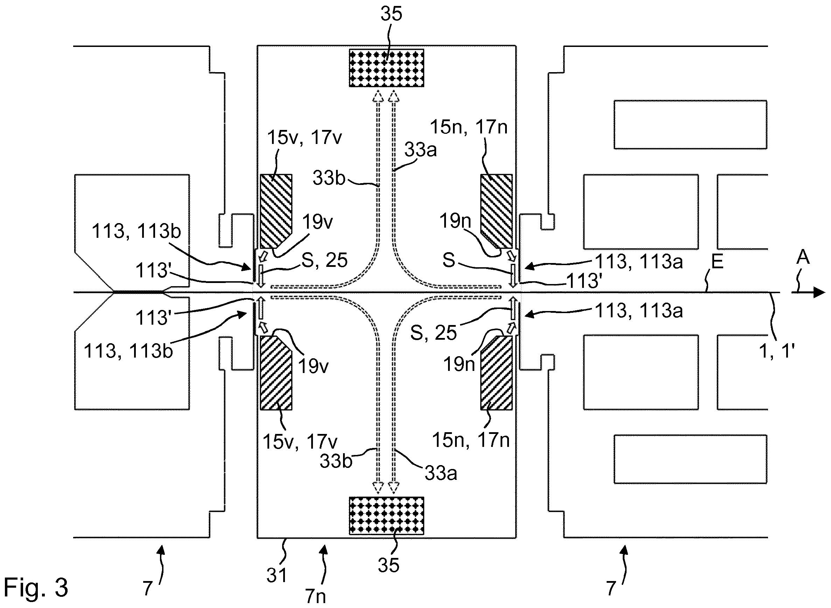

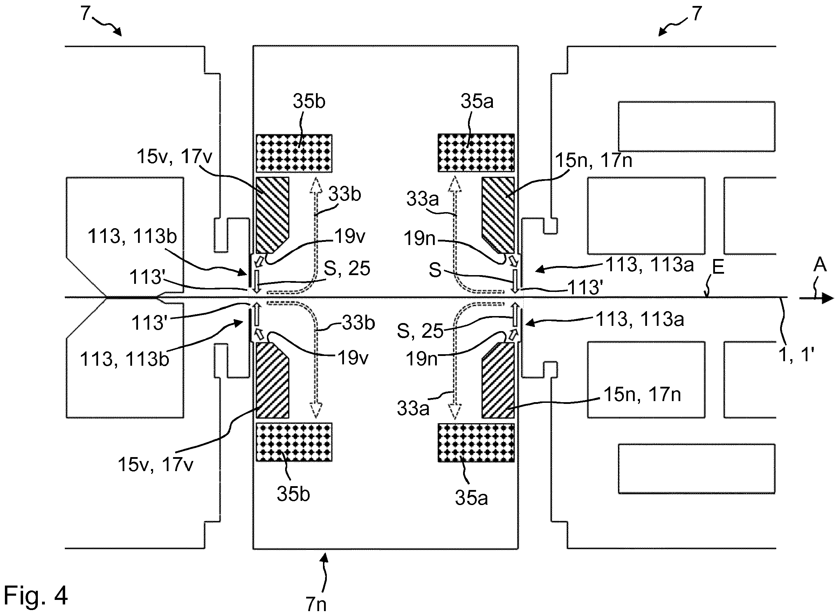

Die Düsenanordnungen 15 und/oder die Düseneinrichtungen 17 und/oder die Düsenaustrittsöffnungen 19 sind also so ausgebildet und/oder angeordnet und/oder ausgerichtet, dass der jeweilige gasförmige Fluidstrom S so an die Zonenaustrittswand 11b oder an die vorlaufenden Neutralzonen-Wand 113b (Figur 3 und 4) bzw. die Zoneneintrittswand 11a und/oder an die nachlaufenden Neutralzonen-Wand 113a (Figur 3 und 4) herangeführt und/oder gelegt oder angelegt wird, dass der gasförmige Fluidstrom S nach dem Auftreffen auf die jeweilige Wand der Zonenaustrittswand 11b oder der vorlaufenden Neutralzonen-Wand 113b bzw. der Zoneneintrittswand 11a und/oder der nachlaufenden Neutralzonen-Wand 113a folgend bis auf die Materialbahn 1 strömt. Dies gilt für alle Ausführungsbeispiele der Erfindung.

Mit anderen Worten ausgedrückt wird also ein flächiger Luftstrahl erzeugt, der auf die entsprechenden Wände, z.B. die Abschottungswand (Shutter-Blech) gelegt wird, so dass der Verlauf dieser Wände oder Abschottungswände dann im Weiteren als Leit- oder Führungsblech dient, um den hierauf gerichteten gasförmigen Medienstrahl in Richtung der bewegten Materialbahn weiter zu führen und zu stabilisieren. Dabei verläuft der Luftstrahl mehr oder weniger in dem Bereich benachbart zur Materialbahn parallel zur Abschottungswand (Shutter-Blech), und zwar mehr oder weniger senkrecht bis auf die Ebene der bewegten Materialbahn zu, um so quasi den Eintritts- und/oder Austrittsspalt zu "sperren".

Durch diesen gasförmigen Fluidstrom wird quasi der oberhalb der Folienbahn verlaufende Teil des jeweiligen Eingangs- und Austrittsspaltes 9a, 9b, aber auch der unterhalb der Folienbahn verlaufende Restbereich des Eingangs- oder Austrittsspaltes 9a, 9b geschlossen, da die entsprechende Düsenanordnung 15 mit der erwähnten Düseneinrichtung 17 bevorzugt oberhalb und unterhalb der Ebene E der bewegten Materialbahn vorgesehen ist.

Um den Effekt des "Sperrens" der jeweiligen Spaltöffnung noch zu verbessern, wird der gasförmige Fluidstrom S jeweils auf einen Temperaturbereich erwärmt, der der Temperatur in der jeweils benachbarten Behandlungszone 7 entspricht.

Wird beispielsweise die Umluft in der in Abzugsrichtung der Neutralzone 7n vorgelagerten Behandlungszone 7 auf einen Temperaturbereich T₁ erwärmt, so wird der gasförmige Fluidstrom S zum Verschluss des Austrittsspaltes 9b bevorzugt ebenfalls auf diesen Temperaturbereich T₁ erhitzt.

Wird beispielsweise ein Kunststofffolienfilm in einer der in Figur 2 gezeigten Neutralzone 7n nachgeordneten Behandlungszone 7 auf einen von dem Temperaturbereich T₁ abweichende Temperaturbereich T₂ erhitzt, so wird dieser gasförmige Fluidstrom S im Bereich der Eintrittspalte 9a der nachfolgenden Behandlungszone 7 ebenfalls bevorzugt auf diesen Temperaturbereich T₂ erwärmt, d.h. dass der gasförmige Fluidstrom S bevorzugt auf jene Temperatur erwärmt werden soll, die der Temperatur des in der nachfolgenden Behandlungszone 7 umströmenden gasförmigen Fluides (in der Regel Luft) entspricht. Dabei soll der erwärmte gasförmige Fluidstrom S bevorzugt um weniger als 20°C, insbesondere weniger als 15°C, weniger als 12,5°C und insbesondere weniger als 10°C, 8°C, 6°C, 5°C, 4°C, 3°C, 2°C oder 1°C von der jeweiligen Temperatur des gasförmigen Mediums in der benachbarten Behandlungszone abweichen.

Anhand von Figur 3 ist im vergrößerten Detail eine mögliche Umsetzung der Erfindung gezeigt. Bei der Variante gemäß Figur 3 ist zwischen einer in Abzugsrichtung A vorlaufenden und demgegenüber nachlaufenden Behandlungszone 7 wiederum eine Neutralzone 7n vorgesehen, die ebenfalls durch eine Gehäuseanordnung 31 begrenzt ist.

In dieser Gehäuseanordnung zu der in Abzugsrichtung A vorlaufenden benachbarten Zone 7 ist in schematischer Querschnittsdarstellung eine erste Düsenanordnung 15v mit einer Düseneinrichtung 17v mit Düsenaustrittsöffnungen 19v gezeigt sowie eine demgegenüber nachlaufend angeordnete und benachbart zum nachfolgenden Eintrittsspalt 9a einer nachfolgenden Zone 7 angeordnete weitere Düsenanordnung 15n mit einer Düseneinrichtung 17n, die eine Düsenaustrittsöffnung 19n aufweist.

Die Düsenanordnung 15 und/oder die Düsenaustrittsöffnung (19v, 19n) ist derart ausgebildet, dass sie sich über die gesamte Breite der Materialbahn 1 erstreckt oder um weniger als +/- 20% und insbesondere um weniger als +/-10% davon abweicht.

Die Anordnung ist - wie vorstehend anhand von Figur 2 beschrieben - um einen entsprechenden gasförmigen Fluidstrahl S zu erzeugen in einem Winkel α auf die benachbarte Shutter-Begrenzungswand 11 gerichtet.

Der über die jeweilige Begrenzungskante 113' des in seinem Abstand in Richtung Materialbahn 1 einstellbaren Shutters oder Shutter-Bleches 113 hinaus bis auf die Filmebene E fortbewegte gasförmige Fluidstrom S wird dann entsprechend den Pfeildarstellungen 33a bzw. 33b umgelenkt. Der gasförmige Fluidstrom S, der von einer vorlaufenden Düsenanordnung 15v hinsichtlich einer in Abzugsrichtung A des Kunststofffolienfilms vorgelagerten Behandlungszone 7 erzeugt wird, wird gemäß Pfeildarstellung 33b in Abzugsrichtung A der Folie umgelenkt, um dann gegebenenfalls etwa im mittleren Bereich der Neutralzone 7n von der Materialbahnebene E weggeführt zu werden, und zwar bis zu einer von der Materialbahn entfernt liegenden Absaugeinrichtung 35.

Der durch die in Abzugsrichtung A nachfolgenden Zone 7 erzeugte gasförmige Fluidstrom S wird unter Vermeidung eines Eintritts durch den Eintrittsspalt 9a in die nachfolgende Zone 7 in entgegengesetzter Richtung zur Abzugsrichtung A des Films in der Neutralzone 7n fortbewegt, bis er ebenfalls etwa im mittleren Bereich der Neutralzone 7n von der Filmebene E gemäß Pfeildarstellung 33a wegbewegt wird, und zwar bis zu der ebenfalls erwähnten Absaugeinrichtung 35.

Die beiden Absaugeinrichtungen 35 können in ihrer Ausbildung und Anordnung unterschiedlichst gewählt werden.

Anhand eines weiteren schematisch gezeigten Ausführungsbeispiels anhand von Figur 4 wiedergegeben, dass auf jede Seite der Materialbahn 1 anstelle von beispielsweise jeweils einer gemeinsamen zur Filmebene E entfernt liegenden Absaugeinrichtung 35 für jede Düsenanordnung 15 getrennte Absaugeinrichtung 35a bzw. 35b vorgesehen sein kann, die beispielsweise auf der zur Filmebene E entfernt liegenden rückwärtigen Seite der jeweiligen Düsenanordnung 15 angeordnet ist. Der Weg der Absaug- und der Strömungsrichtung des gasförmigen Fluidstroms S ist in beiden Fällen allerdings ähnlich, da die in Abzugsrichtung in der Neutralzone 7n vorlaufend angeordnete Düsenanordnung 15v eine Fluidströmung erzeugt, die zunächst in Abzugsrichtung A des Kunststofffolienfilms verläuft, um in Richtung der Absaugeinrichtung 35a weggeführt zu werden, wohingegen die in der Neutralzone 7n nachfolgend angeordnete Düsenanordnung 15n (die einer nachfolgenden Behandlungszone 7 zugeordnet ist) zunächst entgegengesetzt zur Folienabzugsrichtung A längs der Folienebene E strömt, um dann in den rückwärtigen Bereich hinten den Düsenkasten umgelenkt zu werden, wo die entsprechende Absaugeinrichtung 35b angeordnet ist.

Abschließend soll zu den Ausführungsbeispielen nach Figur 3 und Figur 4 noch ergänzt werden, dass in der Neutralzone 7n bevorzugt ebenfalls die Düsen- und - abzugseinrichtungen bevorzugt ebenfalls in der erwähnten Gehäuseeinrichtung 31 untergebracht sind, die beispielsweise ebenfalls in Abzugsrichtung A versetzt zueinander liegende Neutralzonen und -wände 113a und 113b aufweisen, die eingangs- bzw. ausgangsseitig bezogen auf die Abzugsrichtung A der Materialbahn 1 angeordnet sind. Diese Neutralzonenwände 113a, 113b verlaufen bevorzugt parallel zu den jeweils angrenzenden Kammereintritts- bzw. Kammeraustrittswänden 11a, 11b, auch wenn diese - wie in Figur 3 und Figur 4 gezeigt ist - in ihrer überwiegenden Höhe einen Seitenabstand in Abzugsrichtung A zueinander aufweisen.

Bevorzugt zumindest in einer Teilhöhe benachbart zur Ebene E ist dann noch ein Wandabschnitt vorgesehen, der entweder Teil einer Kammerwand 11a, 11b einer Zone 7, sein kann und/oder aber auch Teil der Neutralzonen-Wände 113, d.h. im Konkreten der Neutralzonen-Wände 113a, 113b. Dieser Wandabschnitt ist dann so weit auf die Filmebene E zugeführt, dass zwischen den gegenüberliegenden Begrenzungskanten 13 der jeweilige Eintrittsspalt 9a bzw. Austrittsspalt 9b gebildet ist.

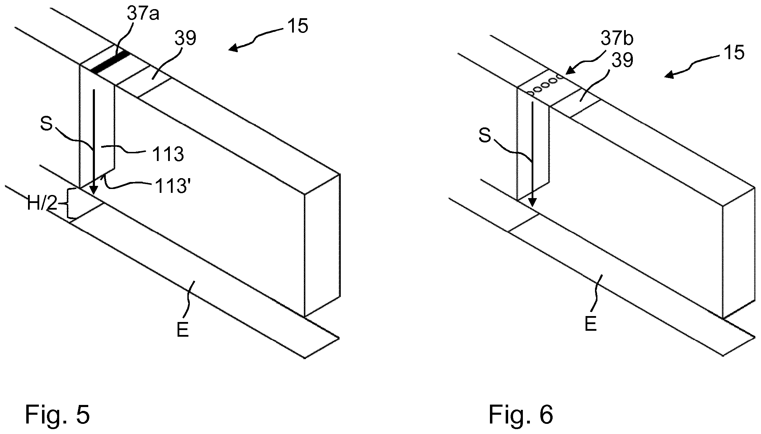

Anhand von Figur 5 und Figur 6 ist nun schematisch in Form einer scheibenförmigen Schnittdarstellung hinsichtlich einer Düsenanordnung 15 gezeigt, dass der gasförmige Fluidstrom S beispielsweise entweder über eine Schlitzdüse 37a oder eine Lochdüsenanordnung 37b leicht schräg in Richtung Shutter-Wand 11 und/oder Shutter-Blech 113 austreten kann, also in dieser Richtung ausgeblasen wird, um dann entlang der Shutter-Begrenzungswand 11 und/oder der dazu parallel verlaufenden Neutralzonen-Wand 113 und über den dort sitzenden Shutter oder das dort sitzende Shutter-Blech hinweg in Richtung Filmebene E gemäß Pfeildarstellung S zu strömen, wobei in Figur 5 und in Figur 6 noch die halbe Spaltenhöhe H_{1/2} angedeutet ist. Hierüber könnten in einer vorgelagerten Zone 7 befindliche gasförmige Fluide austreten, was durch die Shutter-Einrichtung verhindert werden soll. In der Praxis wird dabei der Fluidstrom S zwar über seine Wegstrecke überwiegend senkrecht zur Ebene E verlaufen, im Bereich der Spaltenöffnung zur benachbarten vorlaufenden oder nachlaufenden Zone aber gegebenenfalls leicht schräg zur Ebene E der Materialbahn 1 abgelenkt werden.

In den Figuren 5 und 6 ist dabei auch noch ein Absaugbereich 39 eingezeichnet, der beispielsweise der Absaugöffnung 39 in der Absaugeinrichtung 35 entspricht. Bei der Variante gemäß Figur 5 und Figur 6 ist dabei die Absaugöffnung 39 in Höhe der Düsenöffnung 37a bzw. 37b angeordnet, um zu verdeutlichen, dass die Absaugöffnung 39 für die diversen Varianten der Absaugeinrichtung 35 in unterschiedlicher Konstruktion beispielsweise in der Neutralzone 7n vorgesehen sein kann. Die erwähnten Düsenöffnungen können aber auch höher oder niedriger ausgebildet sein, sodass dann die Absaugöffnungen 39 in anderer relativ Höhe gegenüber der Düsenöffnung liegt.

Die Düsenanordnung ist derart, dass der gasförmige Fluidstrom in Höhe der Materialbahn 1 bzw. zumindest auch in Höhe des Eintritts- oder Austrittsspaltes 9a, 9b sich so breit in Querrichtung der Materialbahn 1 hinweg erstreckt, dass der Fluidstrom in der gesamten Breite auf die Materialbahn 1 auftrifft und dabei die auf jeder Seite der Materialbahn verbleibende etwa hälftige Spaltenhöhe überdeckt, so dass durch diesen gasförmigen Fluidstrom der jeweilige Eintritts- bzw. Austrittsspalt überdeckt und damit durch diesen gasförmigen Fluidstrom quasi "geschlossen" wird. Von daher ist die Düsenanordnung in Querrichtung über die Materialbahn 1 mit in einer solchen Breite vorgesehen oder angeordnet, dass die Spalten von dem Fluidstrom voll überdeckt werden. Möglich ist aber auch, dass die Austrittsdüsen nur in einer geringeren Breite bezogen auf die Materialbahn vorgesehen und/oder ausgebildet sind, dann aber so flächig oder fächerförmig aufgespalten werden, dass der Fluidstrom zumindest in Höhe der Eintritts- und/oder Austrittsspalten 9a, 9b so aufgefächert ist, dass die Spalten durch diesen auf die Materialbahn zu bewegten gasförmigen Fluidstrom quasi geschlossen sind.

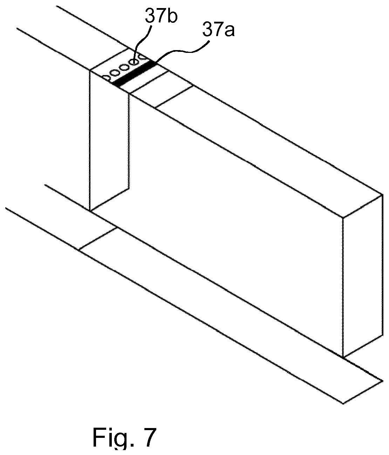

Zu Figur 7 ist abweichend zu Figur 5 und 6 eine Variante gezeigt, in der eine entsprechende Düsenanordnung sowohl eine Schlitzdüse 37a als auch eine vorzugsweise parallel dazu verlaufende Lochdüse 37b aufweist.

## Patentansprüche

1. Behandlungsanlage für durch Behandlungsöfen hindurchführbare flexible Materialbahnen (1) insbesondere in Form eines Kunststofffolienfilms (1'), mit folgenden Merkmalen:
- die Behandlungsanlage umfasst zumindest zwei in einer Abzugsrichtung (A) der Materialbahn (1) aufeinanderfolgende Zonen (7),
- zwischen zumindest zwei in Abzugsrichtung (A) aufeinanderfolgende Zonen (7) ist zumindest eine Neutralzone (7n) vorgesehen,
- die der zumindest einen Neutralzone (7n) vorgelagerte Zone (7) weist eine mit einem Austrittsspalt (9b) vorgesehene Zonenaustrittswand (11b) und/oder Neutralzonen-Wand (113b) auf, durch die die Materialbahn (1) in Abzugsrichtung (A) aus der vorgelagerten Zone (7) in die Neutralzone (7n) austritt,
- die in Abzugsrichtung (A) zu der Neutralzone (7n) nachfolgend Zone (7) weist eine Zoneneintrittswand (11a) und/oder eine Neutralzonen-Wand (113a) auf, die mit einem Eintrittsspalt (9a) versehen ist, durch die hindurch die Materialbahn (1) in die in Abzugsrichtung (a) nachfolgende Zone (7) eintritt,
- in der zumindest einen Neutralzone (7n) ist benachbart zur der Zonenaustrittswand (11b) und/oder der vorlaufenden Neutralzonen-Wand (113b) zum einen und/oder benachbart zu der Zoneneintrittswand (11a) und/oder der nachlaufenden Neutralzonen-Wand (113a) zum anderen eine Düsenanordnung (15v, 15n) vorgesehen, worüber ein bis zur Materialbahn (1) reichender gasförmiger Fluidstrom (S) erzeugt wird,
**gekennzeichnet durch** die folgenden weiteren Merkmale:
die Düsenanordnung (15) der in der Neutralzone (7n) vorlaufenden Düsenanordnung (15v) und/oder der in der Neutralzone (7n) dazu nachlaufenden Düsenanordnung (15n) ist so ausgebildet,
- dass der jeweilige gasförmige Fluidstrom (S) in einem leicht schrägen Anblaswinkel (a) kleiner als 45° in Richtung auf die benachbarte Zonenaustrittswand (11b) und/oder die vorlaufende Neutralzonen-Wand (113b) bzw. die Zoneneintrittswand (11a) und/oder die nachlaufende Neutralzonen-Wand (113a) gerichtet ist, und
- dass die Düsenanordnung (15) derart ausgebildet ist, dass der gasförmige Fluidstrom (S) der Zonenaustrittswand (11b) oder der vorlaufenden Neutralzonen-Wand (113b) bzw. der Zoneneintrittswand (11a) und/oder der nachlaufenden Neutralzonen-Wand (113a) folgend bis auf die Materialbahn (1) strömt.

2. Behandlungsanlage nach Anspruch 1, **dadurch gekennzeichnet, dass** die Düsenanordnung (15) derart ausgebildet und/oder angeordnet und/oder ausgerichtet ist, dass der jeweilige gasförmige Fluidstrom (S) so an die Zonenaustrittswand (11b) oder an die vorlaufenden Neutralzonen-Wand (113b) bzw. die Zoneneintrittswand (11a) und/oder an die nachlaufenden Neutralzonen-Wand (113a) herangeführt und/oder gelegt oder angelegt wird, dass der Verlauf der Zonenaustrittswand (11b) oder der vorlaufenden Neutralzonen-Wand (113b) bzw. der Zoneneintrittswand (11a) und/oder der nachlaufenden Neutralzonen-Wand (113a) als Leit- oder Führungswand für den gasförmige Fluidstrom (S) dient, um diesen in Richtung der bewegten Materialbahn (1) weiter zu führen und zu stabilisieren.

3. Behandlungsanlage nach Anspruch 1 oder 2, **dadurch gekennzeichnet, dass** die Düsenanordnungen (15v, 15n) Düsenaustrittsöffnungen (19v, 18n) aufweisen, die so ausgebildet oder ausgerichtet sind, dass der darüber austretende gasförmige Fluidstrom (S) in einem Anblaswinkel (a) auf die angrenzende Zonenaustrittswand (11b) bzw. Zoneneintrittswand (11a) gerichtet ist, der kleiner als 40° oder kleiner als 35°, 30°, 25°, 20°, 15°, 12°,5°, 10°, 8°, 7°, 6°, 5°, 4°, 3° oder kleiner als 2° oder 1° und vorzugsweise ≥ 0° ist.

4. Behandlungsanlage nach Anspruch 1,2 oder 3, **dadurch gekennzeichnet, dass** die Behandlungsanlage derart ausgebildet ist, dass der in Abzugsrichtung (A) durch die vorlaufend angeordnete Düsenanordnung (15v) zugeführte gasförmige Fluidstrom (S) auf einen Temperaturbereich (T₁) erwärmt wird, der der Behandlungstemperatur (T_{Z1}) in der vorlaufenden Zone (7) entspricht oder um weniger als 10°C davon abweicht und/oder dass der in Abzugsrichtung (A) durch die nachlaufend angeordnete Düsenanordnung (15n) zugeführte gasförmige Fluidstrom (S) auf eine Temperatur (T₂) erwärmt wird, die der Behandlungstemperatur (T_{Z2}) in der nachfolgenden Zone (7) entspricht oder um weniger als 10°C davon abweicht.

5. Behandlungsanlage nach einem der Ansprüche 1 bis 4, **dadurch gekennzeichnet, dass** die Behandlungsanlage derart ausgebildet ist, dass der in der Neutralzone (7n) jeweils austretende gasförmige Fluidstrom (S) auf eine Temperatur (T₁ bzw. T₂) erwärmt wird, die um weniger als 20°C, insbesondere weniger als 15°C, 12,5°C, 10°C 8°C, 7°C, 6°C, 5°C, 4°C, 3°C, 2°C und insbesondere weniger als 1°C von der jeweiligen Behandlungstemperatur (T_{Z1}, T_{Z2}) abweicht, die in der zur Abzugsrichtung (A) hinsichtlich der Neutralzone (7n) vorgelagert angeordneten Zone (7) oder der dazu nachgelagerten Zone (7) vorgesehen ist.

6. Behandlungsanlage nach einem der Ansprüche 1 bis 5, **dadurch gekennzeichnet, dass** die Düsenanordnungen (15v, 15n) Düsenöffnungen (19v, 19n) aufweisen, die aus einer Lochdüsenanordnung (37a) und/oder einer Schlitzdüsenanordnung (37b) bestehen.

7. Behandlungsanlage nach einem der Ansprüche 1 bis 5, **dadurch gekennzeichnet, dass** in der Neutralzone (7n) die hinsichtlich der Abzugsrichtung (A) der Materialbahn (1) vorlaufend angeordnete Düseneinrichtung (15v) und/oder die dazu nachlaufende Düseneinrichtung (15n) eine gemeinsame Absaugeinrichtung (35) für den über die jeweilige Düsenanordnung (15v, 15n) austretenden gasförmigen Fluidstrom (S) vorgesehen ist, die bevorzugt zwischen den beiden Düsenanordnungen (15v, 15n) in einer zur Materialbahn (1) entfernten Position angeordnet ist.

8. Behandlungsanlage nach einem der Ansprüche 1 bis 6, **dadurch gekennzeichnet, dass** jeder der beiden Düsenanordnungen (15v, 15n) eine separate Absaugeinrichtung (35a, 35b) zugeordnet ist, die bevorzugt benachbart oder bezogen auf die Ebene (E) der Materialbahn (1) entfernter liegend angeordnet ist.

9. Behandlungsanlage nach einem der Ansprüche 1 bis 8, **dadurch gekennzeichnet, dass** der Neutralzone (7n) eine Gehäuseeinrichtung (31) vorzugsweise in Form einer separaten Gehäuseeinrichtung (31) zugeordnet ist.

10. Behandlungsanlage nach Anspruch 9, **dadurch gekennzeichnet, dass** in einer Neutralzone (7n) die dort vorgesehenen Düseneinrichtungen (15v, 15n) und/oder die Abzugseinrichtung (35; 35a, 35b) innerhalb dieser separaten Gehäuseeinrichtung (31) angeordnet sind.

11. Behandlungsanlage nach einem der Ansprüche 1 bis 10, **dadurch gekennzeichnet, dass** die Zoneneintrittswand (11a), die Zonenaustrittswand (11b) und/oder die Neutralzonen-Wände (113a, 113b) in einem Winkel von 90° auf die Ebene (E) der Materialbahn (1) zu ausgerichtet sind oder um weniger als 20°, insbesondere weniger als 15°, 12°, 10°, 8°, 7°, 6°, 5°, 4°, 3°, 2° und insbesondere weniger als 1° davon abweichen.

12. Behandlungsanlage nach einem der Ansprüche 1 bis 10, **dadurch gekennzeichnet, dass** die Düsenanordnung (15) und/oder die Düsenaustrittsöffnung (19v, 19n) und/oder die als Luftleiteinrichtungen dienenden Zonenwände (11) und/oder Neutralzonen-Wände (113a, 113b) so ausgebildet und/oder angeordnet sind, dass ein fächerförmiger und/oder flächiger Fluidstrom (S) erzeugt wird.

13. Behandlungsanlage nach einem der Ansprüche 1 bis 12, **dadurch gekennzeichnet, dass** die Düsenanordnung (15) und/oder die Düsenaustrittsöffnung (19v, 19n) derart ausgebildet ist, dass sie sich über die gesamte Breite der Materialbahn (1) erstreckt oder um weniger als +/- 20% und insbesondere um weniger als +/- 10% davon abweicht.

14. Behandlungsanlage nach einem der Ansprüche 1 bis 13, **dadurch gekennzeichnet, dass** die Düsenanordnung (15) und/oder die Düseneintrittsöffnung (19v, 19n) derart ausgebildet ist, dass ein flächiger und/oder fächerförmiger gasförmiger Fluidstrom erzeugt wird, der sich in Höhe des Eintritts- und/oder des Austrittsspaltes (9a, 9b) zumindest über die Breite des Eintritts- und/oder Austrittsspaltes (9a, 9b) erstreckt oder aufgeweitet ist.

## Claims

1. Treatment machine for flexible material webs (1), in particular in the form of a plastic film (1') which can be passed through treatment furnaces, said treatment machine having the following features:
- the treatment machine comprises at least two successive zones (7) in an extraction direction (A) of the material web (1),
- at least one neutral zone (7n) is provided between at least two successive zones (7) in the extraction direction (A),
- the zone (7) upstream from the at least one neutral zone (7n) comprises a zone outlet wall (11b) provided with an outlet slot (9b) and/or a neutral zone wall (113b), through which the material web (1) exits in the extraction direction (A) from the upstream zone (7) into the neutral zone (7n),
- the zone (7) subsequent to the neutral zone (7n) in the extraction direction (A), comprises a zone inlet wall (11a) and/or a neutral zone wall (113a), which is provided with an inlet slot (9a) through which the material web (1) enters the trailing zone (7) in the extraction direction (a),
- in the at least one neutral zone (7n), a nozzle arrangement (15v, 15n) is provided, adjacent to a zone exit wall (11b) and/or a leading neutral zone wall (113b) on the one hand, and/or adjacent to the chamber inlet wall (11a) and/or a trailing neutral zone wall (113a) on the other hand, via which nozzle arrangement is provided, via which a gaseous fluid flow (S) reaching a material web (1) is generated,
**characterised by** the following further features:
the nozzle arrangement (15) of the nozzle arrangement (15v) leading in the neutral zone (7n) and/or the nozzle arrangement (15n) trailing in the neutral zone (7n) is designed in such a way
- that the respective gaseous fluid flow (S) is directed at a slightly oblique angle (a) of less than 45° in the direction of the adjacent zone exit wall (11b) and/or the leading neutral zone wall (113b) or the zone inlet wall (11a) and/or the trailing neutral zone wall (113a), and
- that the nozzle arrangement (15) is formed such that the gaseous fluid flow (S) flows following the zone exit wall (11b) or the leading neutral zone wall (113b) or the zone inlet wall (11a) and/or the trailing neutral zone wall (113a) as far as the material web (1).

2. Treatment machine according to claim 1, **characterised in that** the nozzle arrangement (15) is designed and/or arranged and/or aligned in such a way that the respective gaseous fluid flow (S) is introduced and/or placed or applied to the zone outlet wall (11b) or to the leading neutral zone wall (113b) or the zone inlet wall (11a) and/or to the trailing neutral zone wall (113a), such that the course of the zone outlet wall (11b) or the leading neutral zone wall (113b) or the zone inlet wall (11a) and/or the trailing neutral zone wall (113a) is used as a leading or guide wall for the gaseous fluid flow (S), in order to further guide and stabilise the gaseous fluid flow in the direction of the moving material web (1).

3. Treatment machine according to either claim 1 or claim 2, **characterised in that** the nozzle arrangements (15v, 15n) comprise nozzle outlet openings (19v, 18n), which are designed or aligned in such a way that the gaseous fluid flow (S) emerging therefrom is directed at a blowing angle (a) against the adjacent zone outlet wall (11b) or zone inlet wall (11a), which is less than 40 ° or less than 35°, 30°, 25°, 20°, 15°, 12°, 5°, 10°, 8°, 7°, 6°, 5°, 4°, 3° or less than 2° or 1° and preferably ≥ 0°.

4. Treatment machine according to claim 1, 2 or 3, **characterised in that** the treatment machine is designed in such a way that the gaseous fluid flow (S) supplied in the extraction direction (A) through the nozzle arrangement (15v) arranged to be leading, is heated to a temperature range (T₁) corresponding to the treatment temperature (T_{Z1}) in the leading zone (7) or deviating from this temperature by less than 10°C and/or that the gaseous fluid flow (S) fed in the extraction direction (A) through the nozzle arrangement (15n) arranged to be trailing is heated to a temperature (T₂) which corresponds to the treatment temperature (T_{Z2}) in the following zone (7) or deviates from that temperature by less than 10°C.

5. Treatment machine according to any of claims 1 to 4, **characterised in that** the treatment machine is designed in such a way that the gaseous fluid flow (S) exiting into the neutral zone (7n) is heated to a temperature (T₁ or T₂) which is less than 20°C, in particular less than 15°C, 12.5°C, 10°C, 8°C, 7°C, 6°C, 5°C, 4°C, 3°C, 2°C and in particular deviates less than 1°C from the respective treatment temperature (T_{Z1}, T_{Z2}) which is provided in the zone (7) arranged upstream of the extraction direction (A) with respect to the neutral zone (7n) or the zone (7) located subsequent thereto.

6. Treatment machine according to any of claims 1 to 5, **characterised in that** the nozzle arrangements (15v, 15n) comprise nozzle openings (19v, 19n) consisting of a hole nozzle arrangement (37a) and/or a slotted nozzle arrangement (37b).

7. Treatment machine according to any of claims 1 to 5, **characterised in that** in the neutral zone (7n), the nozzle device (15v) arranged to be leading with respect to the extraction direction (A) of the material web (1) and/or the trailing nozzle device (15n), a common exhaust device (35) is provided for the gaseous fluid stream (S) exiting via the respective nozzle arrangement (15v, 15n), which is preferably arranged between the two nozzle assemblies (15v, 15n) in a position remote from the material web (1).

8. Treatment machine according to any of claims 1 to 6, **characterised in that** each of the two nozzle arrangements (15v, 15n) is associated with a separate exhaust device (35a, 35b), which is preferably arranged adjacent to this or is arranged more remotely relative to the plane (E) of the material web (1).

9. Treatment machine according to any of claims 1 to 8, **characterised in that** the neutral zone (7n) is associated with a housing device (31), preferably in the form of a separate housing device (31).

10. Treatment machine according to claim 9, **characterised in that** in a neutral zone (7n), the nozzle devices (15v, 15n) and/or the extraction device (35; 35a, 35b) provided therein are arranged within this separate housing device (31) .

11. Treatment machine according to one of claims 1 to 10, **characterised in that** the zone inlet wall (11a), the zone outlet wall (11b) and/or the neutral zone walls (113a, 113b) are aligned at an angle of 90° to the plane (E) of the material web (1) or deviate by less than 20°, in particular less than 15°, 12°, 10°, 8°, 7°, 6°, 5°, 4°, 3°, 2° and in particular less than 1° therefrom.

12. Treatment machine according to one of claims 1 to 10, **characterised in that** the nozzle arrangement (15) and/or the nozzle outlet opening (19v, 19n) and/or the zone walls (11) serving as air-guiding devices and/or neutral zone walls (113a, 113b) are designed and/or arranged such that a fan-shaped and/or planar fluid flow (S) is generated.

13. Treatment machine according to one of claims 1 to 12, **characterised in that** the nozzle arrangement (15) and/or the nozzle outlet opening (19v, 19n) is designed such that it extends over the entire width of the material web (1) or deviates by less than +/- 20% and in particular by less than +/- 10 % therefrom.

14. Treatment machine according to one of claims 1 to 13, **characterised in that** the nozzle arrangement (15) and/or the nozzle inlet opening (19v, 19n) is designed such that a planar and/or fan-shaped gaseous fluid flow is generated which, at least at the level of the inlet and/or the outlet gap (9a, 9b), extends or is spread over the width of the inlet and/or outlet slot (9a, 9b).

## Revendications

1. Installation de traitement pour des bandes de matériau (1) souples, notamment sous la forme de films en matière plastique (1'), pouvant traverser des fours de traitement, avec les caractéristiques suivantes :
- l'installation de traitement comprend au moins deux zones (7) successives dans une direction de retrait (A) des bandes de matériau (1),
- au moins une zone neutre (7n) est prévue entre au moins deux zones (7) successives dans la direction de retrait (A),
- la zone (7) placée en amont par rapport à l'au moins une zone neutre (7n) présente une paroi de sortie de zone (11b), prévue pourvue d'une fente de sortie (9b), et/ou une paroi de zone neutre (113b), par laquelle la bande de matériau (1) dans la direction de retrait (A) sort de la zone (7) placée en amont vers la zone neutre (7n),
- la zone (7) en aval par rapport à la zone neutre (7n) dans la direction de retrait (A) présente une paroi d'entrée de zone (11a), et/ou une paroi de zones neutres (113a), qui est munie d'une fente d'entrée (9a), à travers laquelle la bande de matériau (1) pénètre dans la zone (7) suivante dans la direction de retrait (a),
- dans l'au moins une zone neutre (7n), un ensemble de buses (15v, 15n) est prévu au voisinage de la paroi de sortie de zone (11b) et/ou à la paroi de zone neutre (113b) s'étendant en amont, d'une part, et/ou au voisinage de la paroi d'entrée de zone (11a) et/ou à la paroi de zone neutre (113a) s'étendant en aval, d'autre part, ce par quoi un écoulement de fluide (S) sous forme de gaz allant jusqu'à la bande de matériau (1) est généré,
**caractérisé par** les autres caractéristiques suivantes :
l'ensemble de buses (15) de l'ensemble de buses (15v) s'étendant en amont dans la zone neutre (7n), et/ou l'ensemble de buses (15n) s'étendant en aval par rapport à celle-ci dans la zone neutre (7n) est conçu de telle manière
- que l'écoulement de fluide (S) sous forme de gaz respectif est orienté avec un angle de projection (a) légèrement aigu inférieur à 45 ° en direction de la paroi de sortie de zone (11b) voisine et/ou la paroi des zones neutres (113b) en amont, respectivement, la paroi d'entrée de zone (11a), et/ou la paroi des zones neutres (113a) en aval, et
- que l'ensemble de buses (15) est conçu de telle manière que l'écoulement de fluide (S) sous forme de gaz s'écoule en suivant la paroi de sortie de zone (11b), ou la paroi de zones neutres (113b) en amont, respectivement, la paroi d'entrée de zone (11a), et/ou la paroi des zones neutres (113a) en aval, jusqu'à la bande de matériau (1).

2. Installation de traitement selon la revendication 1, **caractérisée en ce que** l'ensemble de buses (15) est conçu, et/ou est disposé, et/ou est orienté, de telle manière que l'écoulement de fluide (S) sous forme de gaz respectif est amené, et/ou est disposé, et/ou est appliqué sur la paroi de sortie de zone (11b), ou sur la paroi des zones neutres (113b) en amont, respectivement, la paroi d'entrée de zone (11a), et/ou la paroi des zones neutres (113a) en aval, que le parcours de la paroi de sortie de zone (11b), ou de la paroi des zones neutres (113b) en amont, respectivement, de la paroi d'entrée de zone (11a), et/ou de la paroi des zones neutres (113a) en aval, sert de paroi de pilotage ou de paroi de guidage pour l'écoulement fluide (S) sous forme de gaz afin de mener celui plus loin en direction de la bande de matériau (1) en mouvement et de le stabiliser.

3. Installation de traitement selon la revendication 1 ou la revendication 2, **caractérisée en ce que** les ensembles de buses (15v, 15n) présentent des orifices de sortie de buse (19v, 18n) qui sont conçues ou orientées de telle manière que l'écoulement de fluide (S) sous forme de gaz en sortant est orienté sur la paroi de sortie de zone (11b), respectivement la paroi d'entrée de zone (11a), dans un angle de projection (a) qui est inférieur à 40 °, ou inférieur à 35 °, 30 °, 25 °, 20 °, 15 °, 12 °, 5 °, 10 °, 8 °, 7 °, 6 °, 5 °, 4 °, 3 ° ou inférieur à 2 °, ou 1 °, et de préférence ≥ 0°.

4. Installation de traitement selon la revendication 1, la revendication 2 ou la revendication 3, **caractérisée en ce que** l'installation de traitement est conçue de telle manière que l'écoulement de fluide (S) sous forme de gaz alimenté en continu par l'ensemble de buses (15v) disposé dans la direction de retrait (A) est réchauffé jusqu'à une plage de température (T₁) qui correspond à la température de traitement (T_{Z1}) dans la zone (7) en amont ou en dévie de moins de 10 °, et/ou que l'écoulement de fluide (S) sous forme de gaz alimenté par l'ensemble de buses (15n) disposé en aval dans la direction de retrait (A) est réchauffé à une température (T₂) qui correspond à la température de traitement (T_{Z2}) dans la zone (7) en aval ou en dévie de moins de 10 °.

5. Installation de traitement selon l'une des revendications 1 à 4, **caractérisée en ce que** l'installation de traitement est conçue de telle manière que l'écoulement de fluide (S) sous forme de gaz respectivement sortant est réchauffé dans la zone neutre (7n) à une température (T₁, respectivement, T₂) qui dévie de moins de 20 °C, notamment de moins de 15 °C, 12,5 °C, 10 °C 8 °C, 7 °C, 6 °C, 5 °C, 4 °C, 3 °C, 2 °C et en particulier de moins de 1 °C de la température de traitement (T_{Z1}, T_{Z2}) respective, qui est prévue dans la zone (7) disposée en amont, ou de la zone (7) disposée en aval, en ce qui concerne la zone neutre (7n) par rapport à la direction de retrait (A).

6. Installation de traitement selon l'une des revendications 1 à 5, **caractérisée en ce que** les ensembles de buses (15v, 15n) présentent des orifices de buses (19v, 19n) qui sont constituées d'un ensemble de buses à trous (37a) et/ou d'un ensemble de buses à fentes (37b).

7. Installation de traitement selon l'une des revendications 1 à 5, **caractérisée en ce qu'**un dispositif d'aspiration (35) commun est prévu dans le dispositif à buse (15v) disposé en amont dans la zone neutre (7n) en ce qui concerne la direction de retrait (A) de la bande de matériau (1) et/ou le dispositif à buse (15n) lui succédant pour l'écoulement de fluide (S) sous forme de gaz sortant par le biais de l'ensemble de buses (15v, 15n) respectif, qui est de préférence disposé entre les deux ensembles de buses (15v, 15n) dans une position éloignée par rapport à la bande de matériau (1).

8. Installation de traitement selon l'une des revendications 1 à 6, **caractérisée en ce qu'**un dispositif d'aspiration (35a, 35b) séparé est associé à chacun des ensembles de buses (15v, 15n), qui est disposé de préférence au voisinage ou décalé plus loin par rapport au plan (E) de la bande de matériau (1).

9. Installation de traitement selon l'une des revendications 1 à 8, **caractérisée en ce qu'**un dispositif de boitier (31), de préférence sous la forme d'un dispositif de boitier (31) séparé, est associé à la zone neutre (7n).

10. Installation de traitement selon la revendication 9, **caractérisée en ce que** les dispositifs de buse (15v, 15n) prévus dans une zone neutre (7n) et/ou les dispositifs d'aspiration (35 ; 35a, 35b) qui y sont prévus sont disposés à l'intérieur de ce dispositif de boitier (31) séparé.

11. Installation de traitement selon l'une des revendications 1 à 10, **caractérisée en ce que** la paroi d'entrée de zone (11a), la paroi de sortie de zone (11b) et/ou les parois des zones neutres (113a, 113b) sont orientées dans un angle de 90 ° sur le plan (E) de la bande de matériau (1) ou en dévient de moins de 20 °C, notamment de moins de 15 °C, 12 °C, 10 °C, 8 °C, 7 °C, 6 °C, 5 °C, 4 °C, 3 °C, 2 °C et en particulier de moins de 1 °C.

12. Installation de traitement selon l'une des revendications 1 à 10, **caractérisée en ce que** l'ensemble de buses (15) et/ou l'orifice de sortie de buse (19v, 19n) , et/ou les parois de zone (11) servant de dispositifs de guidage de l'air, et/ou les parois des zones neutres (113a, 113b) sont conçues et/ou disposées de telle manière qu'un écoulement de fluide (S) en forme d'éventail et/ou plan est créé.

13. Installation de traitement selon l'une des revendications 1 à 12, **caractérisée en ce que** l'ensemble de buses (15) et/ou l'orifice de sortie de buse (19v, 19n) sont conçus de telle manière qu'ils s'étendent sur toute la largeur de la bande de matériau (1) ou en dévie de moins de +/- 20 % et notamment de moins de +/- 10 %.

14. Installation de traitement selon l'une des revendications 1 à 13, **caractérisée en ce que** l'ensemble de buses (15) et/ou l'orifice de sortie de buse (19v, 19n) sont conçus de telle manière qu'un écoulement de fluide sous forme de gaz plan et/ou en forme d'éventail est créé, qui s'étend ou est élargi à la hauteur de la fente d'entrée et/ou de sortie (9a, 9b) au moins sur la largeur de la fente d'entrée et/ou de sortie (9a, 9b).
